# EUROPÄISCHE PATENTSCHRIFT

(11) **EP 3 668 757 B1**
(45) Veröffentlichungstag und Bekanntmachung des Hinweises auf die Patenterteilung: **15.09.2021**
(21) Anmeldenummer: 18758563.3
(22) Anmeldetag: 13.08.2018
(51) Int. Cl.: B60R 16/023

(54) **VERFAHREN ZUM BETREIBEN EINES VERDECKT HINTER EINER RADLAUFVERKLEIDUNG EINES KRAFTFAHRZEUGS ANGEORDNETEN SENSORS MIT ÜBERPRÜFUNG EINER FUNKTIONSFÄHIGKEIT, SENSORVORRICHTUNG, FAHRERASSISTENZSYSTEM SOWIE KRAFTFAHRZEUG**
METHOD FOR OPERATING A SENSOR HIDDEN BEHIND A FENDER FLARE OF A MOTOR VEHICLE WITH VERIFICATION OF OPERABILITY, SENSOR DEVICE, DRIVER ASSISTANCE SYSTEM, AND MOTOR VEHICLE
PROCÉDÉ POUR FAIRE FONCTIONNER UN CAPTEUR DISPOSÉ DISSIMULÉ DERRIÈRE UN REVÊTEMENT DE PASSAGE DE ROUE D'UN VÉHICULE À MOTEUR, AVEC VÉRIFICATION DE L'APTITUDE À FONCTIONNER, DISPOSITIF CAPTEUR, SYSTÈME D'AIDE À LA CONDUITE ET VÉHICULE À MOTEUR

(30) Priorität: 17.08.2017 DE 102017118740
(43) Veröffentlichungstag der Anmeldung: 24.06.2020
(73) Patentinhaber: Valeo Schalter und Sensoren GmbH, 74321 Bietigheim-Bissingen (DE)
(72) Erfinder: HAERING, Felix, 74321 Bietigheim-Bissingen (DE); ROEGER, Marian, 74321 Bietigheim-Bissingen (DE); JAEGER, Steffen, 74321 Bietigheim-Bissingen (DE)
(74) Vertreter: Enge, Sebastian
(86) Internationale Anmeldenummer: PCT/EP2018/071907
(87) Internationale Veröffentlichungsnummer: WO 2019/034599

(56) Entgegenhaltungen:
- EP-A1- 2 618 177
- DE-A1-102015 106 400
- DE-A1-102015 106 408
- DE-C1- 4 235 809
- FR-A1- 3 014 064
- US-A- 5 521 594

## Beschreibung

Die vorliegende Erfindung betrifft ein Verfahren zum Betreiben eines verdeckt hinter einer Radlaufverkleidung eines Kraftfahrzeugs angeordneten Sensors, bei welchem während einer Fahrt des Kraftfahrzeugs auf einer Fahrbahn ein mit dem Sensor bereitgestelltes Sensorsignal zur Nässedetektion ausgewertet wird, wobei falls das Sensorsignal von der Fahrbahn auf die Radlaufverkleidung aufgeschleudertes Wasser beschreibt, die Fahrbahn als nass erkannt wird und ansonsten die Fahrbahn als trocken erkannt wird. Darüber hinaus betrifft die vorliegende Erfindung eine Sensorvorrichtung sowie ein Fahrerassistenzsystem. Schließlich betrifft die vorliegende Erfindung ein Kraftfahrzeug.

Aus dem Stand der Technik sind Sensorvorrichtungen bekannt, welche dazu ausgelegt sind, einen Zustand einer Fahrbahn zu erkennen. Eine solche Sensorvorrichtung kann beispielsweise einen Sensor umfassen, mit dem erkannt werden kann, ob die Fahrbahn trocken ist oder ob sich auf der Fahrbahn Wasser befindet. Anhand des Zustands der Fahrbahn kann ein Reibungskoeffizient zwischen der Fahrbahn und den Reifen des Kraftfahrzeugs bestimmt werden. Diese Information kann von einem Fahrerassistenzsystem des Kraftfahrzeugs genutzt werden. Beispielsweise kann die Geschwindigkeit des Kraftfahrzeugs in Abhängigkeit von dem erkannten Zustand der Fahrbahn beziehungsweise dem Reibungskoeffizienten angepasst werden. Somit kann beispielsweise Aquaplaning verhindert werden.

Im Rahmen der Nässedetektion werden beispielsweise Sensoren verdeckt hinter der Radlaufverkleidung angeordnet. Bei den Sensoren kann es sich um Körperschallsensoren, Beschleunigungssensoren, Ultraschallsensoren oder dergleichen handeln. Mit diesen Sensoren können Wassertropfen, welche auf die Radlaufverkleidung auftreffen, detektiert und quantifiziert werden. Hierzu beschreibt die DE 10 2015 106 400 A1 eine Sensoranordnung zum Erkennen eines Zustands einer Fahrbahn, mit einer Sensoreinrichtung, welche dazu ausgelegt ist, während einer Fahrt eines Kraftfahrzeugs auf der Fahrbahn ein Auftreffen von Wasser auf eine Radlaufverkleidung des Kraftfahrzeugs zu erfassen, und mit einer Steuereinrichtung zum Erkennen des Zustands der Fahrbahn anhand des mittels der Sensoreinrichtung erfassten Auftreffen des Wassers.

Des Weiteren ist es aus dem Stand der Technik im Zusammenhang mit Ultraschallsensoren bekannt, Störungen bei der Messung zu erkennen. Hierzu beschreibt die DE 10 2015 209 282 A1 ein Verfahren zum Erkennen von Dauerstörern und/oder Fremdschallstörern anhand einer Auswertung eines Empfangssignals eines an einem Fahrzeug anbringbaren Ultraschallsensors. Der Ultraschallsensor ist dazu ausgebildet, das Empfangssignal aus wenigstens einem von diesem während eines Messzyklus empfangenen Ultraschallsignal zu erzeugen. Das Verfahren umfasst das Bestimmen eines Rauschpegels eines mittels des Empfangssignals erzeugten Messsignals anhand einer Auswertung einer Signalstärke oder einer Amplitude des Messsignals, die während eines in dem Messzyklus liegenden vordefinierten Zeitraumes vorkommt, und das Erkennen von Dauerstörern und/oder Fremdschallstörern anhand einer Auswertung des bestimmten Rauschpegels.

Bei der Nässedetektion ergibt sich die Problematik, dass sich an der Radlaufverkleidung Stoffe wie Eis, Schnee, Matsch oder sonstige Verschmutzungen ablagern können. Alle diese Ablagerungen können das Messverfahren beeinträchtigen. Diese Verschmutzungen beziehungsweise Ablagerungen senken den Pegel des durch das Wasser hervorgerufenen Sensorsignals beziehungsweise Nutzsignals. Bleibt ein solches Erkennen trotz Verschmutzung in der Radlaufverkleidung aus, so ist im schlimmsten Fall überhaupt keine Detektion der Nässe auf der Fahrbahn mehr möglich, sodass das Warnsystem beziehungsweise Fahrerassistenzsystem trotz Vorhandensein von Nässe fälschlicherweise von einer trockenen Fahrbahn ausgeht. Aus diesem Grund ist es erforderlich, dass eine solche Verschmutzung der Radlaufverkleidung zuverlässig erkannt werden kann. Des Weiteren ist es wünschenswert, Beschädigungen der Sensorvorrichtung zuverlässig detektieren zu können.

Es ist Aufgabe der vorliegenden Erfindung, eine Lösung aufzuzeigen, wie ein Sensor zur Nässedetektion, welcher verdeckt hinter einer Radlaufverkleidung angeordnet ist, zuverlässiger betrieben werden kann.

Diese Aufgabe wird erfindungsgemäß durch ein Verfahren, durch eine Sensorvorrichtung, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Gemäß einer Ausführungsform eines Verfahrens zum Betreiben eines verdeckt hinter einer Radlaufverkleidung eines Kraftfahrzeugs angeordneten Sensors wird insbesondere während einer Fahrt des Kraftfahrzeugs auf einer Fahrbahn ein mit dem Sensor bereitgestelltes Sensorsignal bevorzugt zur Nässedetektion ausgewertet. Falls das Sensorsignal von der Fahrbahn auf die Radlaufverkleidung aufgeschleudertes Wasser beschreibt, wird die Fahrbahn insbesondere als nass erkannt. Ansonsten wird die Fahrbahn bevorzugt als trocken erkannt. Dabei ist es bevorzugt vorgesehen, dass falls die Fahrbahn als trocken erkannt wird, insbesondere überprüft wird, ob das Sensorsignal ein durch die Fahrt des Kraftfahrzeugs hervorgerufenes Rauschsignal beschreibt. Falls das Sensorsignal das Rauschsignal beschreibt, wird der Sensor bevorzugt für die Nässedetektion als funktionsfähig eingestuft.

Ein erfindungsgemäßes Verfahren dient zum Betreiben eines verdeckt hinter einer Radlaufverkleidung eines Kraftfahrzeugs angeordneten Sensors. Hierbei wird während einer Fahrt des Kraftfahrzeugs auf einer Fahrbahn ein mit dem Sensor bereitgestelltes Sensorsignal zur Nässedetektion ausgewertet. Falls das Sensorsignal von der Fahrbahn auf die Radlaufverkleidung aufgeschleudertes Wasser beschreibt, wird die Fahrbahn als nass erkannt. Ansonsten wird die Fahrbahn als trocken erkannt. Dabei ist es vorgesehen, dass falls die Fahrbahn als trocken erkannt wird, überprüft wird, ob das Sensorsignal ein durch die Fahrt des Kraftfahrzeugs hervorgerufenes Rauschsignal beschreibt. Falls das Sensorsignal das Rauschsignal beschreibt, wird der Sensor für die Nässedetektion als funktionsfähig eingestuft.

Mithilfe des Verfahrens soll ein verdeckt hinter einer Radlaufverkleidung angeordneter Sensor betrieben werden. Die Radlaufverkleidung befindet sich in dem Radkasten des Kraftfahrzeugs und kann auch als Radschale, Radhaus oder dergleichen bezeichnet werden. Die Radlaufverkleidung kann aus einem Kunststoff gefertigt sein. Der Sensor ist verdeckt hinter der Radlaufverkleidung, also auf einer dem Reifen abgewandten Seite der Radlaufverkleidung, angeordnet. Dieser Sensor dient zur Nässedetektion auf der Fahrbahn, auf welcher sich das Kraftfahrzeug aktuell bewegt. Mittels des Sensors soll erkannt werden, ob es sich auf der Oberfläche der Fahrbahn, auf welcher das Fahrzeug aktuell bewegt wird, Wasser beziehungsweise eine Flüssigkeit befindet. Dabei können in dem Wasser Partikel, beispielsweise Schmutz oder Staub, oder andere Stoffe vorhanden sein. Bei dem Wasser kann es sich auch um zumindest teilweise geschmolzenes Eis oder Schnee handeln. Wenn nun das Kraftfahrzeug auf der Fahrbahn bewegt wird, wird das Wasser auf der Fahrbahnoberfläche durch die Rotation der Räder beziehungsweise der Reifen des Kraftfahrzeugs aufgeschleudert beziehungsweise aufgewirbelt. Hierdurch entsteht Spritzwasser beziehungsweise eine Gischt. Dieses aufgeschleuderte Wasser kann nun mithilfe des Sensors erfasst werden. Hierzu kann das von dem Reifen aufgeschleuderte Wasser erkannt werden, welches auf die Radlaufverkleidung auftrifft. Dabei kann es ferner vorgesehen sein, dass anhand der Menge des aufgeschleuderten Wassers ermittelt wird, wie viel Wasser sich auf der Fahrbahn befindet. Mit anderen Worten kann somit der Nässegrad der Fahrbahn bestimmt werden.

Dabei ist der Sensor mit der Radlaufverkleidung gekoppelt. Beispielsweise kann der Sensor direkt mit der Radlaufverkleidung verbunden sein. Es kann auch vorgesehen sein, dass zwischen dem Sensor und der Radlaufverkleidung ein entsprechendes Dämpfungselement angeordnet ist. Mittels des Sensors kann Körperschall erfasst werden, welcher sich infolge der Wassertropfen, welche auf die Radlaufverkleidung auftreffen, ausbreitet. Mit dem Sensor können auch mechanische Schwingungen der Radlaufverkleidung erfasst werden. Es kann zudem der Fall sein, dass mit dem Sensor akustische Signale erfasst werden, welche durch das Aufschleudern des Wassers entstehen. Mit dem Sensor wird ein Sensorsignal bereitgestellt, welches den Körperschall, die Schwingung und/oder das akustische Signal beschreibt. Dieses Sensorsignal kann dann mit einem entsprechenden Steuergerät ausgewertet werden. Der Sensor und das Steuergerät bilden zusammen eine Sensorvorrichtung. Bei der Auswertung des Sensorsignals wird nun entschieden, ob sich Wasser auf der Fahrbahn befindet oder ob die Fahrbahn trocken ist. Dabei kann es insbesondere vorgesehen sein, dass die Signalamplitude des Sensorsignals ausgewertet wird. Sobald Wassertropfen auf die Radlaufverkleidung geschleudert werden, steigt die Amplitude des Sensorsignals deutlich an.

Gemäß einem wesentlichen Aspekt der vorliegenden Erfindung ist es vorgesehen, dass falls die Fahrbahn als trocken erkannt wird, überprüft wird, ob das Sensorsignal ein Rauschsignal beschreibt. Dieses Rauschsignal wird durch die Fahrt des Kraftfahrzeugs auf der Fahrbahn beziehungsweise durch die Bewegung des Kraftfahrzeugs auf der Fahrbahn hervorgerufen. Das Rauschsignal beschreibt ein Rauschen, also ein Signal mit breitem unspezifischem Frequenzspektrum. Dieses Rauschsignal kann durch das Abrollgeräusch der Reifen auf der Fahrbahn, durch Vibrationen von Teilen des Kraftfahrzeugs, insbesondere der Karosserie, und/oder von aerodynamischen Geräuschen beziehungsweise Windgeräuschen hervorgerufen werden. Vorliegend wurde beobachtet, dass während der Fahrt des Kraftfahrzeugs typischerweise das Rauschsignal beziehungsweise Störgeräusche auftreten. Wenn diese Störgeräusche mit dem Sensor erfasst werden können, kann davon ausgegangen werden, dass der Sensor funktionsfähig beziehungsweise funktionstüchtig ist. Dies bezieht sich insbesondere auf den Aspekt der Nässedetektion. Dies bedeutet also, dass der Sensor für die Nässedetektion auf der Fahrbahn verwendet werden kann oder zur Verfügung steht. Insbesondere kann davon ausgegangen werden, dass sich keine Verschmutzungen oder Ablagerungen, wie beispielsweise Matsch, Schnee, Eis oder dergleichen, an der Radlaufschale befinden. Des Weiteren kann auf zuverlässige Weise davon ausgegangen werden, dass der Sensor mit der Radlaufverkleidung gekoppelt ist. Wenn das Rauschsignal nicht oder nur sehr stark gedämpft mit dem Sensor empfangen wird, wird davon ausgegangen, dass der Sensor für die Nässedetektion aktuell nicht zur Verfügung steht. Somit kann bei trockener Fahrbahn die Funktionsfähigkeit des Sensors bezüglich der Nässedetektion überprüft werden. Dies ermöglicht insgesamt einen zuverlässigen Betrieb der Sensorvorrichtung.

Bevorzugt wird die Fahrbahn als nass erkannt, falls eine Amplitude des Sensorsignals einen vorbestimmten Wert überschreitet. Wie bereits erläutert, kann das Vorhandensein von Wasser auf der Fahrbahn anhand der Amplitude des Sensorsignals bestimmt werden. Falls Wasser durch die Rotation der Räder beziehungsweise Reifen aufgeschleuderte wird, kann dies mit dem Sensor erfasst werden. Das hierbei mittels des Sensors bereitgestellte Sensorsignal weist im Vergleich zu einem Sensorsignal, das mit dem Sensor bei trockener Fahrbahn bereitgestellt wird, eine deutlich höhere Amplitude auf. Somit kann anhand des Sensorsignals auf zuverlässige Weise erkannt werden, ob die Fahrbahn trocken oder nass ist. Die Überprüfung der Funktionsfähigkeit des Sensors beziehungsweise der Sensorvorrichtung kann zu vorbestimmten Zeitpunkten durchgeführt werden, falls sicher davon ausgegangen werden kann, dass die Fahrbahn trocken ist. Dabei kann die Überprüfung der Funktionsfähigkeit beispielsweise nach dem Starten des Kraftfahrzeugs durchgeführt werden. Es kann auch vorgesehen sein, dass die Überprüfung periodisch zu vorbestimmten Zeitpunkten beziehungsweise nach vorbestimmten Zeitintervallen erfolgt. Um sicherzustellen, dass die Fahrbahn trocken ist, können auch Informationen von weiteren Sensoren, beispielsweise einem Regensensor, herangezogen werden. Es kann auch vorgesehen sein, dass Informationen empfangen werden, welche die Witterungsbedingungen in der Umgebung des Kraftfahrzeugs beschreiben.

Weiterhin ist es vorteilhaft, wenn zum Überprüfen, ob das Sensorsignal das Rauschsignal beschreibt, ein Signalpegel des Sensorsignals mit einem vorbestimmten Schwellenwert verglichen wird. Dabei beschreibt der Signalpegel insbesondere die Amplitude des Sensorsignals. In Versuchen hat sich herausgestellt, dass das Rauschsignal, welches während der Fahrt des Kraftfahrzeugs bei trockener Fahrbahn erzeugt wird, einen typischen Pegel beziehungsweise einen Mindestpegel aufweist. Zur Prüfung der Funktionsfähigkeit kann nun untersucht werden, ob ein Signalpegel des Sensorsignals, welches mit dem Sensor bereitgestellt wird, den vorbestimmten Schwellenwert überschreitet. Dieser Schwellenwert kann im Vorfeld spezifisch für das Fahrzeugmodell ermittelt werden. Zu diesem Zweck können beispielsweise entsprechende Versuchsfahrten durchgeführt werden.

In einer weiteren Ausführungsform wird zum Überprüfen, ob das Sensorsignal das Rauschsignal beschreibt, ein zeitlicher Verlauf des Sensorsignals ausgewertet. Um zu überprüfen, ob der Sensor bezüglich der Nässedetektion funktionstüchtig ist, kann der zeitliche Verlauf des Sensorsignals ausgewertet werden. Das Rauschsignal beschreibt insbesondere ein Rauschen mit einer definierten Amplitude, wobei hierbei die Amplitude des Sensorsignals in Abhängigkeit von der Zeit deutlich schwankt. Anhand des Signalverlaufs kann nun das Störsignal beziehungsweise das Rauschsignal, welches während der Fahrt des Kraftfahrzeugs entsteht, erkannt werden. Falls die Radlaufverkleidung verschmutzt ist und/oder der Sensor nicht funktionsgerecht mit der Radlaufverkleidung verbunden ist, wird üblicherweise ein Sensorsignal mit dem Sensor bereitgestellt, welches eine deutlich geringere Amplitude aufweist und welches in Abhängigkeit von der Zeit nur einzelne Signalspitzen beziehungsweise Peaks zeigt. Durch die Verschmutzung wird das Rauschsignal beziehungsweise der Teil des Rauschsignals, welcher an den Sensor übertragen wird, stark gedämpft. Somit kann des Sensors auf zulässige Weise überprüft werden.

Bevorzugt wird zum Überprüfen, ob das Sensorsignal das Rauschsignal beschreibt, überprüft, ob sich das Sensorsignal in Abhängigkeit von einer aktuellen Geschwindigkeit des Kraftfahrzeugs verändert. Wie bereits erläutert, wird das Rauschsignal durch Windgeräusche, Abrollgeräusch der Reifen und/oder Vibrationen der Fahrzeugkomponenten erzeugt. Hierbei kann überprüft werden, ob sich dieses Rauschsignal in Abhängigkeit von der Geschwindigkeit des Kraftfahrzeugs verändert. Insbesondere kann überprüft werden, ob sich eine Amplitude des Rauschsignals mit zunehmender Geschwindigkeit des Kraftfahrzeugs erhöht. Dies ermöglicht eine zuverlässige Identifizierung des Rauschsignals.

Gemäß einer weiteren Ausführungsform wird, falls der Sensor für die Nässedetektion als nicht funktionsfähig eingestuft wird, anhand eines zeitlichen Verlaufs des Sensorsignals eine Verschmutzung der Radlaufverkleidung und/oder eine fehlerhafte Befestigung des Sensors an der Radlaufverkleidung und/oder Beschädigung der Radlaufverkleidung erkannt. Wenn nur für einen vorbestimmten Zeitbereich erkannt wird, dass der Sensor aktuell für die Nässedetektion nicht zur Verfügung, kann davon ausgegangen werden, dass die Radlaufverkleidung verschmutzt ist. Auf diese Weise können also funktionsbeeinträchtigende Verschmutzungsszenarien in der Radlaufverkleidung erkannt werden. Falls allerdings der Sensor dauerhaft als nicht funktionsfähig für die Nässedetektion klassifiziert wird, kann davon ausgegangen werden dass der Sensor nicht funktionsgerecht mit der Radlaufverkleidung verbunden ist und/oder die Radlaufverkleidung beschädigt ist.

Bevorzugt wird mittels des Sensors das Sensorsignal im Ultraschallbereich aufgezeichnet. Der Sensor kann also bevorzugt als Ultraschallsensor ausgebildet sein. Dieser Sensor kann eine Membran aufweisen, welche mit der Radlaufverkleidung mechanisch gekoppelt ist. Beispielsweise kann die Membran direkt an der Radlaufverkleidung angeordnet sein. Es kann auch vorgesehen sein, dass zwischen der Radlaufverkleidung und der Membran ein entsprechendes Dämpfungselement angeordnet ist. Des Weiteren kann der Ultraschallsensor ein Wandlerelement, beispielsweise einem piezoelektrischen Element aufweisen, mittels welchem eine Schwingung der Membran erfasst werden kann und in Abhängigkeit von der Schwingung das Sensorsignal ausgegeben werden kann. Dabei ist es bevorzugt vorgesehen, dass ein handelsüblicher Ultraschallsensor verwendet wird, der ansonsten beispielsweise in Fahrerassistenzsystemen zur Unterstützung bei Einparkvorgängen oder zur Abstandsmessung verwendet wird. Insbesondere wird das Sensorsignal in einem Frequenzbereich von etwa 50 kHz bereitgestellt. Alternativ dazu kann der Sensor als Körperschallsensor, als akustischer Sensor, als Beschleunigungssensor, als Mikrofon oder dergleichen ausgebildet sein. Es kann auch vorgesehen sein, dass mit dem Sensor Frequenzen im Bereich unterhalb von 10 kHz erfasst werden.

Weiterhin ist es vorteilhaft, wenn ein Steuersignal ausgegeben wird, falls der Sensor für die Nässedetektion als nicht funktionsfähig eingestuft wird. Dieses Steuersignal kann mittels der Sensorvorrichtung beziehungsweise mittels des Steuergeräts der Sensorvorrichtung ausgegeben werden. Dieses Steuersignal kann beispielsweise an eine Ausgabeeinrichtung des Kraftfahrzeugs übertragen werden. Mittels dieser Ausgabeeinrichtung kann eine Warnmeldung an den Fahrer ausgegeben werden, welche beschreibt, dass die Sensorvorrichtung beziehungsweise das System zur Nässedetektion aktuell nicht funktionstüchtig ist beziehungsweise nicht zur Verfügung steht. Die Warnmeldung kann den Fahrer auch darauf hinweisen, dass die Radlaufverkleidung gereinigt werden soll. Diese Warnmeldung kann an den Fahrer optisch, akustisch/oder haptisch ausgegeben werden. Des Weiteren kann das Steuersignal an weitere Fahrerassistenzsysteme des Kraftfahrzeugs übertragen werden. Beispielsweise kann das Steuersignal an ein Antiblockiersystem, ein elektronisches Stabilitätsprogramm oder andere Fahrerassistenzsystem übertragen werden, welche die Nässeinformation als Einstellungsgrundlage verwenden. Damit können diese Fahrerassistenzsysteme über die aktuelle Nichtverfügbarkeit der Nässedetektion informiert werden und somit beispielsweise in einen sicheren Zustand versetzt werden.

Eine erfindungsgemäße Sensorvorrichtung für ein Fahrerassistenzsystem eines Kraftfahrzeugs ist zum Durchführen eines erfindungsgemäßen Verfahrens und der vorteilhaften Ausgestaltungen davon ausgelegt. Die Sensorvorrichtung kann einen Sensor und ein elektronisches Steuergerät umfassen. Bei dem Sensor kann es sich insbesondere um einen Ultraschallsensor handeln. Mit diesem Ultraschallsensor kann grundsätzlich ein Ultraschallsignal empfangen werden. Vorliegend ist der Ultraschallsensor so ausgebildet, dass dieser Körperschall und/oder ein akustisches Signal, welches durch das ausgeschleuderte Wasser erzeugt wird, erfassen kann. Dies bedeutet insbesondere, dass mit dem Ultraschallsensor mechanische Schwingungen oder Schallsignale in dem Ultraschallbereich erfasst werden können.

Ein erfindungsgemäßes Fahrerassistenzsystem für ein Kraftfahrzeug umfasst eine erfindungsgemäße Sensorvorrichtung. Bevorzugt ist das Fahrerassistenzsystem dazu ausgelegt, eine Geschwindigkeit des Kraftfahrzeugs in Abhängigkeit von Vorhandensein des Wassers auf der Fahrbahn anzupassen. Wenn beispielsweise mittels der Sensorvorrichtung erkannt wird, dass die Wassermenge, die sich auf der Oberfläche der Fahrbahn befindet, einen vorbestimmten Grenzwert überschreitet, kann die Geschwindigkeit des Kraftfahrzeugs mithilfe des Fahrerassistenzsystems reduziert werden. Hierzu kann das Fahrerassistenzsystem einen Eingriff in die Bremsanlage des Kraftfahrzeugs durchführen. Durch die Reduzierung der Geschwindigkeit des Kraftfahrzeugs kann die Gefahr von Aquaplaning reduziert werden. Es kann auch vorgesehen sein, dass mithilfe des Fahrerassistenzsystems ein entsprechender Warnhinweis an den Fahrer ausgegeben wird, falls erkannt wird, dass die sich auf der Fahrbahn befindende Wassermenge einen kritischen Wert erreicht. Somit kann der Fahrer beispielsweise auf die Gefahr von Aquaplaning hingewiesen werden.

Ein weiterer Aspekt der Erfindung betrifft eine Verkleidungsanordnung mit einem Sensor und mit einer Radlaufverkleidung, wobei der Sensor an der Radlaufverkleidung angeordnet ist. Der Sensor und/oder die Radlaufverkleidung können eine entsprechende Befestigungseinrichtung zur Befestigung des Sensors an der Radlaufverkleidung aufweisen.

Ein erfindungsgemäßes Kraftfahrzeug umfasst ein erfindungsgemäßes Fahrerassistenzsystem. Das Kraftfahrzeug ist insbesondere als Personenkraftwagen ausgebildet. Es kann auch vorgesehen sein, dass das Kraftfahrzeug als Nutzfahrzeug ausgebildet ist.

Die mit Bezug auf das erfindungsgemäße Verfahren vorgestellten bevorzugten Ausführungsformen und deren Vorteile gelten entsprechend für die erfindungsgemäße Sensorvorrichtung, für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der Erfindung, welches ein Fahrerassistenzsystem mit einer Sensorvorrichtung zum Erkennen eines Vorhandenseins von Wasser auf einer Fahrbahn aufweist;
- Fig. 2: eine ausschnittsweise Seitenansicht des Kraftfahrzeugs, welche einen Sensor der Sensorvorrichtung zeigt, welcher verdeckt hinter einer Radlaufverkleidung angeordnet ist;
- Fig. 3: einen zeitlichen Verlauf eines Sensorsignals des Sensors, wobei das Sensorsignals ein Rauschsignal beschreibt, welches bei der Fahrt des Kraftfahrzeugs auf trockener Fahrbahn hervorgerufen wird; und
- Fig. 4: einen zeitlichen Verlauf des Sensorsignals, welches mittels des Sensors während der Fahrt des Kraftfahrzeugs auf trockener Fahrbahn bei einer verschmutzten Radlaufverkleidung bereitgestellt wird.

In den Figuren werden gleiche oder funktionsgleiche Elemente mit den gleichen Bezugszeichen versehen.

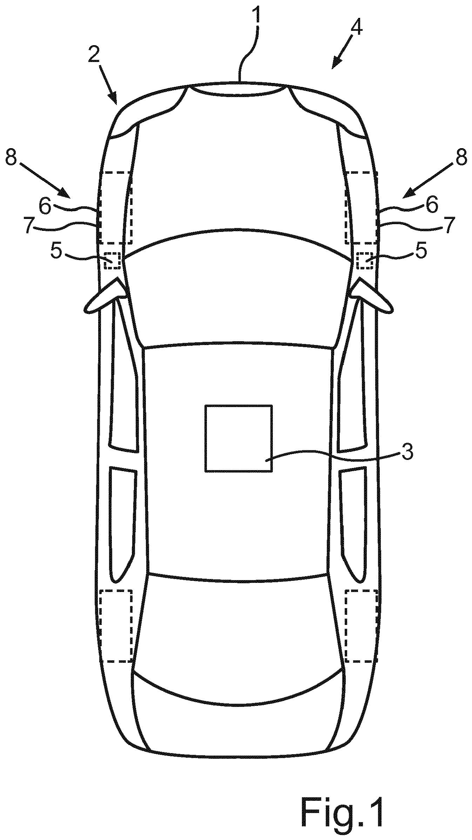

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2. Das Fahrerassistenzsystem 2 dient zur Unterstützung des Fahrers beim Führen des Kraftfahrzeugs 1. Insbesondere kann mittels des Fahrerassistenzsystems 2 Aquaplaning verhindert werden.

Das Fahrerassistenzsystem 2 umfasst eine Sensorvorrichtung 4. Die Sensorvorrichtung 4 umfasst wiederrum ein elektronisches Steuergerät 3. Darüber hinaus umfasst Sensorvorrichtung 4 zumindest einen Sensor 5. In dem vorliegenden Ausführungsbeispiel umfasst die Sensorvorrichtung 4 zwei Sensoren 5, wobei jedem der vorderen Räder 6 des Kraftfahrzeugs 1 ein Sensor 5 zugeordnet ist. Die Anzahl und Anordnung der Sensoren 5 ist vorliegend rein beispielhaft zu verstehen. Die jeweiligen Sensoren 5 sind an einer Radlaufverkleidung 7 des Kraftfahrzeugs 1 angeordnet. Ein Sensor 5 und eine Radlaufverkleidung 7 bilden zusammen eine Verkleidungsanordnung 8.

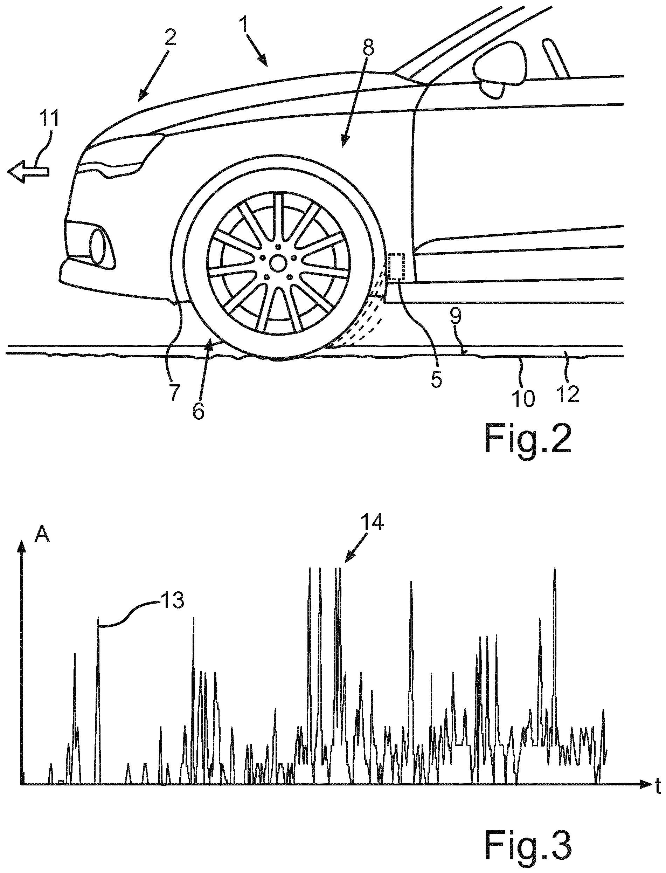

Die Sensoren 5 sind vorliegend als Ultraschallsensoren ausgebildet. Diese Ultraschallsensoren umfassen jeweils eine Membran, die beispielsweise topfförmig ausgebildet sein kann. Die Membran der Ultraschallsensoren kann beispielsweise aus einem Metall, insbesondere Aluminium, gefertigt sein. Die Membran ist mit einem Wandlerelement, das beispielsweise eine piezoelektrische Keramik umfasst, mechanisch gekoppelt. Mithilfe des Wandlerelements kann eine Schwingung der Membran erfasst werden und in Form eines Sensorsignals 13 (siehe Fig. 3) ausgegeben werden. Dieses Sensorsignal 13 kann dann zur weiteren Auswertung an das Steuergerät 3 übertragen werden.

Fig. 2 zeigt den Frontbereich des Kraftfahrzeugs 1 gemäß Fig. 1 in einer Seitenansicht. Vorliegend ist zu erkennen, dass sich das Kraftfahrzeug 1 auf einer Oberfläche 9 einer Fahrbahn 10 befindet beziehungsweise auf dieser bewegt wird. Die Fahrbahn 10 ist vorliegend nass. Es befindet sich also Wasser 12 auf der Oberfläche 9 der Fahrbahn 10. Das Kraftfahrzeug 1 wird vorliegend auf der Fahrbahn 10 in Vorwärtsfahrtrichtung 11 bewegt. Hierbei wird das Rad 6 des Kraftfahrzeugs 1 auf der Fahrbahn 10 abgerollt. Da sich das Wasser 12 auf der Oberfläche 9 der Fahrbahn 10 befindet, wird das Wasser 12 durch die Rotation des Rades 6 aufgeschleudert und trifft auf die Radlaufverkleidung 7. Infolge des Auftreffens des Wassers 12 beziehungsweise der Wassertropfen auf die Radlaufverkleidung 7 breitet sich Körperschall innerhalb der Radlaufverkleidung 7 aus. Dieser Körperschall kann mittels des Sensors 5 erfasst werden. Zudem entsteht ein Schallsignal innerhalb des Radkastens des Kraftfahrzeugs 1, welches mit dem Sensor 5 detektiert werden kann. Darüber hinaus wird die Radlaufverkleidung 7 zu mechanischen Schwingungen angeregt, welche mit dem Sensor 5 erfasst werden können. Diese mechanischen Schwingungen breiten sich entlang der Radlaufverkleidung 7 aus.

Zunächst wird anhand von Sensorsignale 13, welche mit den jeweiligen Sensoren 5 bereitgestellt werden, überprüft, ob die Fahrbahn 10, auf welcher sich das Kraftfahrzeug 1 aktuell befindet, nass oder trocken ist. Hierzu kann eine Amplitude A des Sensorsignals 13 ausgewertet werden. Wenn das Wasser 12 auf die Radlaufverkleidung 7 auftrifft, weist das Sensorsignal 13 eine deutlich höhere Amplitude A auf, als wenn kein Wasser 12 auf die Radlaufverkleidung 7 auftrifft. Auf diese Weise kann unterschieden werden, ob die Fahrbahn 10 nass ist oder trocken ist. Des Weiteren können Informationen von weiteren Sensoren, beispielsweise einem Regensensor, oder Informationen von Wetterdiensten herangezogen werden, um zu bestimmen, ob die Fahrbahn 10 nass oder trocken ist. Wenn festgestellt wird, dass die Fahrbahn 10 trocken ist, wird überprüft, ob der Sensor 5 beziehungsweise die Sensorvorrichtung 4 für die Nässedetektion funktionsfähig ist.

Wenn das Kraftfahrzeug 1 auf einer trockenen Fahrbahn 10 bewegt wird, ergibt sich ein Sensorsignal 13, welches einem Rauschsignal 14 entspricht. Ein solches Sensorsignal 13 ist in Fig. 3 dargestellt. Hierbei ist auf der Abszisse die Zeit t und auf der Ordinate die Amplitude A dargestellt. Dieses Sensorsignal 13 beziehungsweise Rauschsignal 14 ergibt sich durch die Abrollgeräusche der Räder 6 beziehungsweise Reifen auf der Fahrbahn 10, durch Luftgeräusche und/oder durch Vibrationen von Teilen des Kraftfahrzeugs 1. Dieses Rauschsignal 14 beschreibt die zuvor erwähnten Störgeräusche beziehungsweise Störsignale und ist abhängig von der aktuellen Geschwindigkeit des Kraftfahrzeugs 1. Wenn nun bei der Fahrt des Kraftfahrzeugs 1 auf der trockenen Fahrbahn 10 das Sensorsignal 13 ein solches Rauschsignal 14 beschreibt, wird davon ausgegangen, dass der Sensor 5 für die Nässedetektion funktionsfähig ist beziehungsweise für die Nässedetektion zur Verfügung steht.

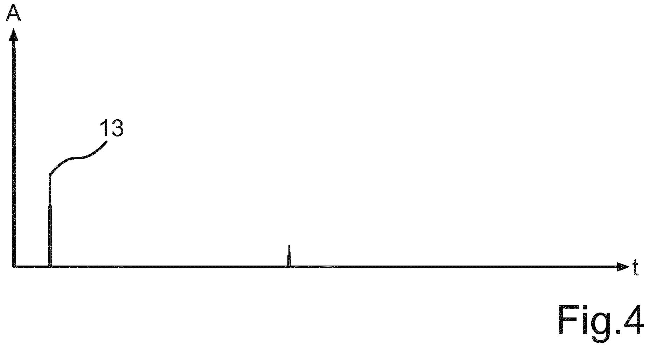

Im Vergleich hierzu zeigt Fig. 4 den zeitlichen Verlauf eines Sensorsignals 13 für den Fall, dass die Radlaufverkleidung 7 verschmutzt ist. Dies bedeutet, dass sich Schmutz, Schlamm, Eis oder Schnee auf der Radlaufverkleidung 7 befindet. Durch die Verschmutzung wird die Übertragung der Störsignale an den Sensor 5 deutlich gedämpft. Dies ist eindeutig in Fig. 4 zu erkennen. Hier beschreibt das Sensorsignal 13 nicht das typische Rauschsignal 14, sondern weist nur vereinzelte Signalspitzen beziehungsweise Peaks auf. Überwiegend weist die Amplitude A des Sensorsignals 13 den Wert Null auf. Für den Fall, dass der Sensor 5 nicht bestimmungsgemäß mit der Radlaufverkleidung 7 verbunden ist und/oder das die Radlaufverkleidung beschädigt ist, ergibt sich ein ähnliches Sensorsignal 13. Falls ein wie in Fig. 4 dargestelltes Sensorsignal 13 mittels des Sensors 5 bereitgestellt wird, wird davon ausgegangen, dass der Sensor 5 für die Nässedetektion nicht funktionsfähig ist beziehungsweise aktuell nicht zur Verfügung steht.

Falls erkannt wird, dass der Sensor 5 für die Nässedetektion aktuell nicht zur Verfügung steht, kann mittels des Steuergeräts 3 ein Steuersignal ausgesendet werden. Dieses Steuersignal kann an eine Ausgabeeinrichtung des Fahrerassistenzsystems 2 übertragen werden. Nach dem Empfangen des Steuersignals kann dann mittels der Ausgabeeinrichtung eine Warnmeldung an den Fahrer des Kraftfahrzeugs 1 ausgegeben werden, welche diesen darüber informiert, dass die Nässedetektion aktuell nicht durchgeführt werden kann. Die Warnmeldung kann den Fahrer auch darauf hinweisen, dass der die Radlaufverkleidung 7 reinigen soll. Ferner kann das Steuersignal an weitere Komponenten und/oder Fahrerassistenzsysteme des Kraftfahrzeugs 1 übertragen werden.

## Patentansprüche

1. Verfahren zum Betreiben eines verdeckt hinter einer Radlaufverkleidung (7) eines Kraftfahrzeugs (1) angeordneten Sensors (5), bei welchem während einer Fahrt des Kraftfahrzeugs (1) auf einer Fahrbahn (10) ein mit dem Sensor (5) bereitgestelltes Sensorsignal (13) zur Nässedetektion ausgewertet wird, wobei falls das Sensorsignal (13) von der Fahrbahn (10) auf die Radlaufverkleidung (7) aufgeschleudertes Wasser (12) beschreibt, die Fahrbahn (10) als nass erkannt wird und ansonsten die Fahrbahn (10) als trocken erkannt wird,
**dadurch gekennzeichnet, dass**
falls die Fahrbahn (10) als trocken erkannt wird, überprüft wird, ob das Sensorsignal (13) ein durch die Fahrt des Kraftfahrzeugs (1) hervorgerufenes Rauschsignal (14) beschreibt und falls das Sensorsignal (13) das Rauschsignal (14) beschreibt, der Sensor (5) für die Nässedetektion als funktionsfähig eingestuft wird.

2. Verfahren nach Anspruch 1,
**dadurch gekennzeichnet, dass**
die Fahrbahn (10) als nass erkannt wird, falls eine Amplitude (A) des Sensorsignals (13) einen vorbestimmten Wert überschreitet.

3. Verfahren nach Anspruch 1 oder 2,
**dadurch gekennzeichnet, dass**
zum Überprüfen, ob das Sensorsignal (13) das Rauschsignal (14) beschreibt, ein Signalpegel des Sensorsignals (13) mit einem vorbestimmen Schwellenwert verglichen wird.

4. Verfahren nach einem der vorhergehenden Ansprüche,
**dadurch gekennzeichnet, dass**
zum Überprüfen, ob das Sensorsignal (13) das Rauschsignal (14) beschreibt, ein zeitlicher Verlauf des Sensorsignals (13) ausgewertet wird.

5. Verfahren nach einem der vorhergehenden Ansprüche,
**dadurch gekennzeichnet, dass**
zum Überprüfen, ob das Sensorsignal (13) das Rauschsignal (14) beschreibt, überprüft wird, ob sich das Sensorsignal (13) in Abhängigkeit von einer aktuellen Geschwindigkeit des Kraftfahrzeugs (1) verändert.

6. Verfahren nach einem der vorhergehenden Ansprüche,
**dadurch gekennzeichnet, dass**
falls der Sensor (5) für die Nässedetektion als nicht funktionsfähig eingestuft wird, anhand eines zeitlichen Verlaufs des Sensorsignals (13) eine Verschmutzung der Radlaufverkleidung (7) und/oder eine fehlerhafte Befestigung des Sensors (5) an der Radlaufverkleidung (7) und/oder Beschädigung der Radlaufverkleidung (7) erkannt wird.

7. Verfahren nach einem der vorhergehenden Ansprüche,
**dadurch gekennzeichnet, dass**
mittels des Sensors (5) das Sensorsignal (13) im Ultraschallbereich erfasst wird.

8. Verfahren nach einem der vorhergehenden Ansprüche,
**dadurch gekennzeichnet, dass**
ein Steuersignal ausgegeben wird, falls der Sensor (5) für die Nässedetektion als nicht funktionsfähig eingestuft wird.

9. Sensorvorrichtung (4) für ein Fahrerassistenzsystem (2) eines Kraftfahrzeugs (1) mit zumindest einem verdeckt hinter einer Radlaufverkleidung des Kraftfahrzeugs angeordneten Sensor (5) und mit einem Steuergerät (3), wobei die Sensorvorrichtung (4) zum Durchführen eines Verfahrens nach einem der vorhergehenden Ansprüche ausgelegt ist.

10. Sensorvorrichtung (4) nach Anspruch 9,
**dadurch gekennzeichnet, dass**
der Sensor (5) ein Ultraschallsensor ist und dazu ausgelegt ist, ein Ultraschallsignal zu empfangen.

11. Fahrerassistenzsystem (2) für ein Kraftfahrzeug (1) mit einer Sensorvorrichtung nach Anspruch 9 oder 10.

12. Kraftfahrzeug (1) mit einem Fahrerassistenzsystem (2) nach Anspruch 11.

## Claims

1. Method for operating a sensor (5), which is arranged to be concealed behind a wheel arch lining (7) of a motor vehicle (1), in the course of which a sensor signal (13) for wetness detection, provided using the sensor (5) while the motor vehicle (1) is driving on a road (10), is evaluated, wherein, if the sensor signal (13) describes water that is whirled up from the road (10) onto the wheel arch lining (7), the road (10) is identified as being wet, and if not, the road (10) is identified as being dry,
**characterized in that**,
if the road (10) is identified as being dry, a check is carried out as to whether the sensor signal (13) describes a noise signal (14) brought about by the motor vehicle (1) driving, and, if the sensor signal (13) describes the noise signal (14), the sensor (5) is classified as being functional for wetness detection.

2. Method according to Claim 1,
**characterized in that**
the road (10) is identified as being wet if an amplitude (A) of the sensor signal (13) exceeds a predetermined value.

3. Method according to Claim 1 or 2,
**characterized in that**,
for checking whether the sensor signal (13) describes the noise signal (14), a signal level of the sensor signal (13) is compared to a predetermined threshold value.

4. Method according to one of the preceding claims,
**characterized in that**,
for checking whether the sensor signal (13) describes the noise signal (14), a time profile of the sensor signal (13) is evaluated.

5. Method according to one of the preceding claims,
**characterized in that**,
for checking whether the sensor signal (13) describes the noise signal (14), a check is carried out as to whether the sensor signal (13) changes depending on a current speed of the motor vehicle (1).

6. Method according to one of the preceding claims,
**characterized in that**,
if the sensor (5) is classified as not being functional for wetness detection, soiling of the wheel arch lining (7) and/or incorrect mounting of the sensor (5) to the wheel arch lining (7) and/or damage to the wheel arch lining (7) is identified on the basis of a time profile of the sensor signal (13).

7. Method according to one of the preceding claims,
**characterized in that**
the sensor signal (13) is captured in the ultrasound region by means of the sensor (5)

8. Method according to one of the preceding claims,
**characterized in that**
a control signal is output if the sensor (5) is classified as not being functional for wetness detection.

9. Sensor apparatus (4) for a driver assistance system (2) of a motor vehicle (1), having at least one sensor (5), which is arranged to be concealed behind a wheel arch lining of the motor vehicle, and having a control unit (3), wherein the sensor apparatus (4) is designed for carrying out a method according to one of the preceding claims.

10. Sensor apparatus (4) according to Claim 9,
**characterized in that**
the sensor (5) is an ultrasonic sensor and is designed to receive an ultrasound signal.

11. Driver assistance system (2) for a motor vehicle (1) having a sensor apparatus according to Claim 9 or 10.

12. Motor vehicle (1) having a driver assistance system (2) according to Claim 11.

## Revendications

1. Procédé pour faire fonctionner un capteur (5) disposé dissimulé derrière une garniture de passage de roue (7) d'un véhicule automobile (1), dans lequel, pendant un déplacement du véhicule automobile (1) sur une chaussée (10), un signal de capteur (13) fourni par le capteur (5) pour détecter de l'humidité est évalué, dans lequel, si le signal de capteur (13) décrit de l'eau (12) projetée de la chaussée (10) sur la garniture de passage de roue (7), la chaussée (10) est identifiée comme étant humide, et sinon, la chaussée (10) est identifiée comme étant sèche,
**caractérisé en ce que**, si la chaussée (10) est identifiée comme étant sèche, il est vérifié si le signal de capteur (13) décrit un signal de bruit (14) provoqué par le déplacement du véhicule automobile (1), et si le signal de capteur (13) décrit le signal de bruit (14), le capteur (5) est considéré comme étant opérationnel pour la détection de l'humidité.

2. Procédé selon la revendication 1, **caractérisé en ce que** la chaussée (10) est identifiée comme étant humide si une amplitude (A) du signal de capteur (13) dépasse une valeur prédéterminée.

3. Procédé selon la revendication 1 ou 2, **caractérisé en ce que** pour la vérification si le signal de capteur (13) décrit le signal de bruit (14), un niveau de signal du signal de capteur (13) est comparé à une valeur seuil prédéterminée.

4. Procédé selon l'une quelconque des revendications précédentes, **caractérisé en ce que** pour la vérification si le signal de capteur (13) décrit le signal de bruit (14), une courbe dans le temps du signal de capteur (13) est évaluée.

5. Procédé selon l'une quelconque des revendications précédentes, **caractérisé en ce que** pour la vérification si le signal de capteur (13) décrit le signal de bruit (14), il est vérifié si le signal de capteur (13) varie en fonction d'une vitesse actuelle du véhicule automobile (1).

6. Procédé selon l'une quelconque des revendications précédentes, **caractérisé en ce que**, si le capteur (5) est considéré comme non opérationnel pour la détection de l'humidité, un encrassement de la garniture de passage de roue (7) et/ou une fixation défectueuse du capteur (5) à la garniture de passage de roue (7) et/ou un endommagement de la garniture de passage de roue (7) sont identifiés à l'aide d'une courbe dans le temps du signal de capteur (13).

7. Procédé selon l'une quelconque des revendications précédentes, **caractérisé en ce que** le signal de capteur (13) est détecté dans le domaine des ultrasons au moyen du capteur (5).

8. Procédé selon l'une quelconque des revendications précédentes, **caractérisé en ce qu'**un signal de commande est émis si le capteur (5) est considéré comme non opérationnel pour la détection de l'humidité.

9. Dispositif capteur (4) pour un système d'assistance au conducteur (2) d'un véhicule automobile (1) comprenant au moins un capteur (5) disposé dissimulé derrière une garniture de passage de roue du véhicule automobile et un appareil de commande (3), le dispositif capteur (4) étant conçu pour effectuer un procédé selon l'une quelconque des revendications précédentes.

10. Dispositif capteur (4) selon la revendication 9, **caractérisé en ce que** le capteur (5) est un capteur à ultrasons et est conçu pour recevoir un signal ultrasonore.

11. Système d'assistance au conducteur (2) pour un véhicule automobile (1) comprenant un dispositif capteur selon la revendication 9 ou 10.

12. Véhicule automobile (1) comprenant un système d'assistance au conducteur (2) selon la revendication 11.
